# EUROPEAN PATENT APPLICATION

(11) **EP 4 826 280 A1**
(43) Date of publication of application: **21.10.2026**
(21) Application number: 25170885.5
(22) Date of filing: 16.04.2025
(51) Int. Cl.: F16H 61/02

(54) **RANGE GEAR SHIFT BASED ON SHIFTING CRITERION**

(71) Applicant: Volvo Truck Corporation, 405 08 Göteborg (SE)
(72) Inventor: MAGNUSSON, Andreas, 443 92 LERUM (SE); WINBLAD, Hanna, 433 62 SÄVEDALEN (SE); JAKOBSSON, Samuel, 418 73 GÖTEBORG (SE)
(74) Representative: Kransell & Wennborg KB

(57) **Abstract**

The present disclosure relates to a computer system comprising processing circuitry configured to control a transmission with a range gear, wherein the transmission is controlled to remain in a high range gear stage unless at least one shifting criterion is fulfilled, the shifting criterion comprising that a second vehicle speed is predicted to be higher than a first vehicle speed at a second, upcoming point in time.

## Description

### TECHNICAL FIELD

The disclosure relates generally to control of a transmission comprising a range gear. In particular aspects, the disclosure relates to range gear shift based on shifting criterion. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicle drivelines may employ multi-speed transmissions and range gears to optimize performance across varying speed ranges. While gear shifting can be managed smoothly in some driveline architectures, shifting across a range gear may lead to temporary propulsion interruption, which negatively affects vehicle drivability. There is thus a desire to improve drivability related to range gear shifting.

### SUMMARY

According to a first aspect of the disclosure, there is provided a computer system comprising processing circuitry configured to control a transmission of an electrically operated vehicle driveline of a vehicle, the transmission comprising a range gear with a high range gear stage and a low range gear stage, wherein the high range gear stage provides a lower transmission ratio compared to the low range gear stage, control the transmission to operate the range gear in the high range gear stage, determine a predicted travel trajectory of the vehicle from a first point in time to a second point in time, predict a first vehicle speed and a second vehicle speed of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and control the transmission to remain in the high range gear stage unless at least one shifting criterion is fulfilled, the shifting criterion comprising that the second vehicle speed is predicted to be higher than the first vehicle speed at the second point in time. The first aspect of the disclosure may seek to improve drivability and propulsion continuity in electric vehicles by avoiding unnecessary range downshifts that require power cut-off. A technical benefit may include that unnecessary range gear downshifts can be reduced by comparing predicted vehicle speeds for different gear states over a future time interval. Power interruptions associated with range shifting may thereby be avoided. By avoiding power interruptions, improved drivability through smoother propulsion behavior may be obtained, particularly in low-speed conditions. Gear changes may thus be performed only when the at least one shifting criterion is fulfilled.

As stated above, the high range gear stage provides a lower transmission ratio compared to the low range gear stage. In this context, the term "transmission ratio" refers to the overall gear ratio between an input shaft of the range gear and an output shaft of the range gear. Accordingly, when the range gear assumes the high range gear stage, the output shaft rotates faster relative to the input shaft compared to when the range gear assumes the low range gear stage. In other words, for a given rotational speed of the input shaft, the output shaft achieves a higher rotational speed in the high range gear stage than in the low range gear stage. Put it differently, for a given rotational speed of the output shaft, the input shaft will achieve a lower rotational speed in the high range state than in the low range state.

Optionally in some examples, including in at least one preferred example, the shifting criterion comprises that the second vehicle speed is predicted to be greater than the first vehicle speed by at least a predefined offset value. A technical benefit may include that the gear shift to the low range gear stage is only permitted when such gear shift provides a meaningful performance gain, rather than a marginal improvement, thereby avoiding unnecessary range shifts that would introduce a power interruption without delivering a substantial drivability advantage. The predefined offset may ensure that only shifts which improve vehicle speed beyond a threshold are considered beneficial.

Optionally in some examples, including in at least one preferred example, the shifting criterion further comprises that a predicted vehicle acceleration in the high range gear stage being below a minimum threshold acceleration level at the first point in time. A technical benefit may include that the gear selection process accounts not only for predicted vehicle speed but also for minimum acceptable drivability in terms of acceleration. By introducing a threshold for acceleration in the high range gear stage, the computer system may ensure that the vehicle does not remain in a gear that fails to deliver sufficient responsiveness.

Optionally in some examples, including in at least one preferred example, the processing circuitry is configured to control the transmission to change to the low range gear stage within a predefined time interval from the first point in time in response to the at least one shifting criterion being fulfilled. A technical benefit may include that the gear shift to the low range gear stage can be initiated substantially at the first point in time, even though the prediction concerns vehicle behavior at a later point in time. This may allow the system to act proactively based on forward-looking estimations.

Optionally in some examples, including in at least one preferred example, the processing circuitry is configured to control the transmission to change to the low range gear stage at the first point in time in response to determining that the at least one shifting criterion is fulfilled. A technical benefit may include that the gear shift to the low range gear stage is executed at the first point in time, thereby enabling a substantially immediate action upon fulfillment of a shifting criterion.

Optionally in some examples, including in at least one preferred example, the prediction of the first and second vehicle speeds is performed by simulating a vehicle model comprising parameters of the vehicle driveline and external operating conditions. A technical benefit may include that simulating a vehicle model comprising parameters of the vehicle driveline and external operating conditions enables more accurate and physically realistic predictions of future vehicle speeds. By basing the prediction on a model that reflects actual vehicle dynamics and environment, the system may improve the quality of the gear selection decision and reduce the likelihood of unnecessary or ineffective gear shifts.

The vehicle model may hence simulate the dynamic behavior of the vehicle over a future time interval to predict vehicle speeds under different gear states. The vehicle model may incorporate parameters representing the vehicle driveline and external operating conditions. Parameters of the driveline may, as will be exemplified below, may include the available motor torque, motor power, motor speed limits, gear ratios, and battery power availability. External conditions may include road inclination, aerodynamic drag, rolling resistance, and vehicle mass. The vehicle model may operate by computing the expected propulsion torque available at the wheels for a given gear stage, and using that torque to calculate the vehicle's longitudinal acceleration. The acceleration may be integrated over time, optionally using numerical methods, to derive a predicted speed profile for each gear stage under evaluation. As will also be described further below, a simulation may be performed over a prediction horizon, for example between 3 and 10 seconds, starting from the first point in time. The output of the vehicle model may include the predicted vehicle speed at the future second point in time or a complete speed trajectory over the prediction horizon. According to some examples, the vehicle model may be continuously updated with current sensor data and external map data to reflect changes in vehicle load, road slope, or driving resistance. The computer system may hereby make accurate and adaptive gear selection decisions based on realistic estimations of future vehicle performance.

Optionally in some examples, including in at least one preferred example, the simulation of the vehicle model comprises at least one of: an available motor torque of the electrically operated vehicle driveline, battery capability, road inclination along the predicted travel trajectory, rolling resistance, and aerodynamic drag. A technical benefit may include that the simulation of the vehicle model is based on input parameters that may influence vehicle acceleration and speed prediction, such as available motor torque, battery capability, road inclination, rolling resistance, and aerodynamic drag. Including one or more of these parameters may enable the simulation to more accurately reflect actual operating conditions and vehicle limitations, thereby improving the precision of the predicted vehicle speeds and improving the reliability of the gear selection decision.

Optionally in some examples, including in at least one preferred example, the first and second vehicle speeds are predicted as respective speed profiles along the predicted travel trajectory from the first point in time to the second point in time. A technical benefit may include that predicting the first and second vehicle speeds as respective speed profiles along the travel trajectory may enable a more detailed representation of how the vehicle is expected to accelerate or decelerate over time for each gear stage. Predicting speed as a function of time or distance may allow the computer system to evaluate not only the final speed outcome but also intermediate behavior such as transient acceleration, which may improve the gear selection decision. The prediction of the second vehicle speed may include the gear shift simulated at the first point in time.

Optionally in some examples, including in at least one preferred example, the predicted travel trajectory is determined in response to map data or sensor data indicative of future road slope. A technical benefit may include that determining the predicted travel trajectory in response to map data or sensor data indicative of future road slope can enable the computer system to anticipate upcoming changes in elevation. Using such data as input to the trajectory prediction may allow the computer system to account for expected variations in driving resistance, thereby improving prediction accuracy.

Optionally in some examples, including in at least one preferred example, the first point in time is a current point in time during operation of the vehicle. A technical benefit may include that the computer can react to current and instant vehicle and environmental conditions.

Optionally in some examples, including in at least one preferred example, the second point in time is within a predetermined time period following the first point in time. A technical benefit may include that a controlled prediction horizon for evaluating future vehicle behavior can be provided.

Optionally in some examples, including in at least one preferred example, the predetermined time period is in the range between 3 and 10 seconds from the first point in time. A technical benefit may include that the computer system can be provided with a prediction horizon that is short enough to maintain real-time responsiveness, yet long enough to capture meaningful changes in driving conditions.

Optionally in some examples, including in at least one preferred example, the electrically operated vehicle driveline comprises a first electric traction motor and a first motor transmission connected to each other, and a second electric traction motor and a second motor transmission connected to each other, wherein the first and second motor transmissions are connected to the range gear. A technical benefit may include that independent torque control and gear shifting per motor branch can be achieved. A flexible power distribution may be obtained.

Optionally in some examples, including in at least one preferred example, the processing circuitry is further configured to control a gear shift of the first motor transmission while, during the gear shift of the first motor transmission, controlling the second traction motor and the second motor transmission to maintain a torque flow from the second traction motor to the range gear. A technical benefit may include that uninterrupted propulsion during gear changes can be provided. The uninterrupted propulsion gear changed may also be referred to as a power shift capability which improves vehicle drivability by avoiding, for example, torque dips associated with gear transitions. It should thus be understood that the power shift is preferably executed without a gear shift of the range gear.

According to a second aspect, there is provided a vehicle comprising the computer system of any of the examples described above in relation to the first aspect.

Optionally in some examples, including in at least one preferred example, the vehicle further comprises an electrically operated vehicle driveline comprising a transmission, wherein the transmission comprises a range gear with a high range state and a low range stage. A technical benefit may include that an adaptation of the overall transmission ratio to different driving conditions can be enabled. The use of distinct gear stages may allow the vehicle to operate efficiently at both low and high speeds, improving torque delivery during low-speed operation while enabling energy-efficient cruising at higher speeds.

Further effects and features of the second aspect are largely analogous to those described above in relation to the first aspect.

According to a third aspect, there is provided a computer-implemented method, comprising: controlling, by processing circuitry of a computer system, a transmission of an electrically operated vehicle driveline of a vehicle, the transmission comprising a range gear with a high range gear stage and a low range gear stage, wherein the high range gear stage provides a lower transmission ratio compared to the low range gear stage, controlling, by the processing circuitry, the transmission to operate the range gear in the high range gear stage, determining, by the processing circuitry, a predicted travel trajectory of the vehicle from a first point in time to a second point in time, predicting, by the processing circuitry, a first vehicle speed and a second vehicle speed of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and controlling, by the processing circuitry, the transmission to remain in the high range gear stage unless at least one shifting criterion is fulfilled, the shifting criterion comprising that the second vehicle speed is predicted to be higher than the first vehicle speed at the second point in time. The third aspect of the disclosure may seek to improve drivability and propulsion continuity in electric vehicles by avoiding unnecessary range downshifts that require power cut-off. A technical benefit may include that unnecessary range gear downshifts can be reduced by comparing predicted vehicle speeds for different gear states over a future time interval. Power interruptions associated with range shifting may thereby be avoided. By avoiding power interruptions, improved drivability through smoother propulsion behavior may be obtained, particularly in low-speed conditions. Gear changes may thus be performed only when the at least one shifting criterion is fulfilled.

Optionally in some examples, including in at least one preferred example, the method further comprises: controlling, by the processing circuitry, the transmission to change to the low range gear stage within a predefined time interval from the first point in time in response to the at least one shifting criterion being fulfilled. A technical benefit may include that the gear shift to the low range gear stage can be initiated substantially at the first point in time, even though the prediction concerns vehicle behavior at a later point in time. This may allow the system to act proactively based on forward-looking estimations.

Optionally in some examples, including in at least one preferred example, the method further comprises: controlling, by the processing circuitry, the transmission to change to the low range gear stage at the first point in time in response to determining that the at least one shifting criterion is fulfilled. A technical benefit may include that the gear shift to the low range gear stage is executed at the first point in time, thereby enabling a substantially immediate action upon fulfillment of a shifting criterion.

Further effects and features of the third aspect are largely analogous to those described above in relation to the first aspect.

According to a fourth aspect, there is provided a computer program product comprising program code for performing, when executed by the processing circuitry, the method of any of the examples described above in relation to the third aspect.

According to a fifth aspect, there is provided a non-transitory computer-readable storage medium comprising instructions, which when executed by the processing circuitry, cause the processing circuitry to perform the method of any of the examples described above in relation to the third aspect.

Effects and features of the fourth and fifth aspects are largely analogous to those described above in relation to the first and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary illustration of an electrically operated vehicle driveline according to an example.
Fig. 3 is an exemplary illustration of the vehicle operating a stretch of road according to an example.
Figs. 4A - 4B are exemplary illustrations of speed predictions according to examples.
Fig. 5 is an exemplary flow chart of a method of controlling a range gear according to an example.
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure aims at improve drivability and propulsion continuity in electric vehicles by avoiding unnecessary range downshifts that require power cut-off. A technical benefit may include that unnecessary range gear downshifts can be reduced by comparing predicted vehicle speeds for different gear states over a future time interval.

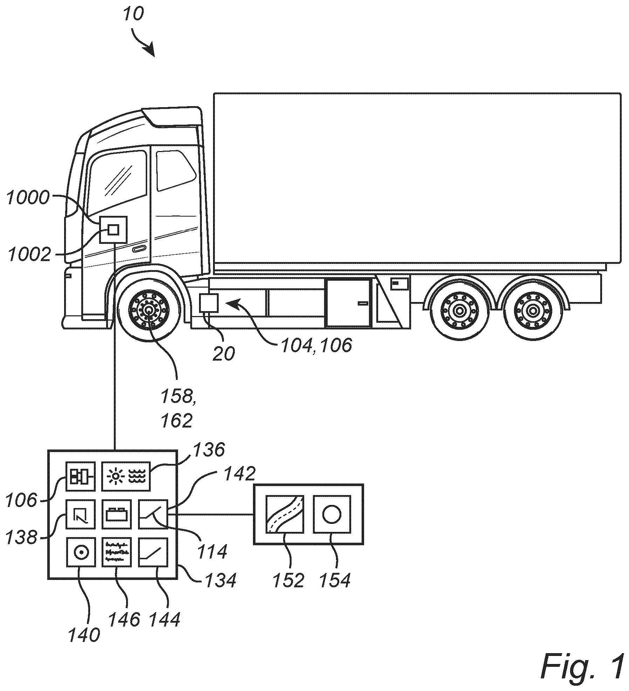

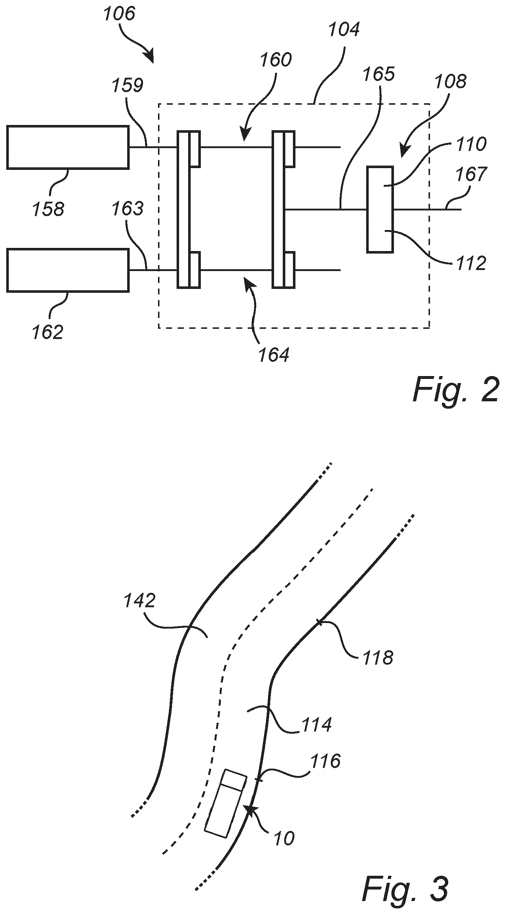

With reference to Fig. 1 which illustrates an exemplary vehicle 10 according to an example. The exemplified vehicle 10 comprises an electrically operated vehicle driveline 106. The driveline 106 comprises an electric traction motor configured to deliver torque to the wheels of the vehicle 10 and to operate in a regenerative mode during braking, thereby enabling recovery of electrical energy. In the exemplification of Fig. 1, the driveline 106 comprises a first electric traction motor 158 and a second electric traction motor 162. The vehicle 10 also comprises a traction battery 20 configured to feed electric power to the electric traction motors 158, 162 during propulsion, and to receive electric energy from the electric traction motors 158, 162 during recuperative braking of the electric traction motors 158, 162. Further details of the driveline 106 will be presented below in relation to the description of Fig. 2.

The vehicle 10 further comprises a computer system 1000 comprising processing circuitry 1002 configured to control, for example, the transmission 104 and predict vehicle behavior based on current and future driving conditions as will be described in further detail below. The exemplified computer system 1000 comprises a vehicle model 134. The vehicle model 134 comprises parameters of the vehicle driveline 106 and external operating conditions 136. The external operating conditions 136 may include parameters that influence the driving resistance or propulsion requirements of the vehicle 10. Such conditions may comprise road inclination, ambient temperature, air density, surface friction, wind conditions, and other environmental or terrain-related factors that affect vehicle dynamics or energy consumption.

The exemplified vehicle model 134 further comprises at least one of: an available motor torque 138 of the electric traction motors and a battery capability 140 of the traction battery 20. The battery capability 140 may refer to one or more parameters of the traction battery 20 that influence its ability to supply or absorb electrical energy. The battery capability may include state of charge, available discharge power, available regenerative charging capacity, internal resistance, and thermal condition. The battery capability 140 may be used by the vehicle model 134 to assess whether sufficient power is available for propulsion or whether regenerative braking can be applied. The exemplified vehicle model 134 may also comprise a road inclination 142 along a predicted travel trajectory 114 (see Fig. 3), rolling resistance 144, and aerodynamic drag 146. The predicted travel trajectory 114 may be determined in response to map data 152 or sensor data 154 indicative of future road slope.

In order to describe an example of the electrically operated vehicle driveline 106 in further detail, reference is made to Fig. 2. Fig. 2 illustrates an exemplary configuration of the electrically operated vehicle driveline 106 of the vehicle 10 according to an example. In the exemplified arrangement, the driveline 106 comprises a first electric traction motor 158 and a second electric traction motor 162 as described above in connection with Fig. 1. The first electric traction motor 158 is connected to a first motor transmission 160 via a first input shaft 159. Similarly, the second electric traction motor 162 is connected to a second motor transmission 164 via a second input shaft 163. The first and second motor transmissions 160, 164 are arranged in parallel and are mechanically coupled to a common transmission shaft 165. The transmission shaft 165 is connected to a range gear 108.

The range gear 108 comprises a high range gear stage 110 and a low range gear stage 112. The high range gear stage 110 provides a lower transmission ratio compared to the low range gear stage 112. In other words, for a given rotational input at the transmission shaft 165, the output shaft 167 rotates faster when the range gear 108 is operated in the high range gear stage 110 compared to when the range gear 108 is operated in the low range gear stage 112. The output shaft 167 is connected to the range gear 108 and extends rearward for connection to the driven wheels of the vehicle 10. The connection to the wheels may be direct or may include a differential unit or other transmission members (not shown in the figure).

In the exemplified configuration, the first 158 and second 162 electric traction motors and their respective motor transmissions 160, 164 are independently controllable. The illustrated configuration enables the computer system 1000 to control a gear shift of the first motor transmission 160 while the second electric traction motor 162 and the second motor transmission 164 continue to provide torque to the range gear 108. This arrangement allows torque flow to be maintained from the second electric traction motor 162 to the range gear 108 while the first motor transmission 160 undergoes a gear shift.

Turning now to Fig. 3 which is an exemplary illustration of the vehicle 10 operating a stretch of road according to an example. In particular, the vehicle 10 is illustrated as arranged at a current position which corresponds to a first point in time 116. A predicted travel trajectory 114 extends forward from the vehicle's current position and represents a future path of travel along the road. The predicted travel trajectory 114 extends from the first point in time 116 to a second, upcoming point in time 118. The predicted travel trajectory 114 may be determined in advance by the vehicle model 134 described above. The determination of the predicted travel trajectory 114 may be based on road inclination 142 and external input data such as map data 152 or sensor data 154 indicative of future road slope. Hereby, a predicted vehicle speed for operating the vehicle 10 between the first point in time 116 and the second point in time 118 may be obtained or determined by the processing circuitry 1002.

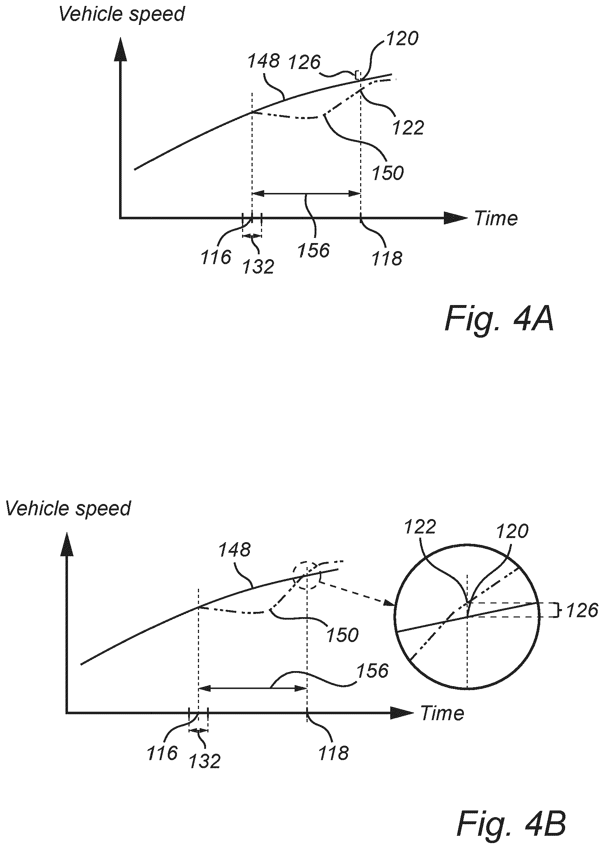

Reference is now made to Figs. 4A - 4B which are exemplary illustrations of speed predictions according to examples. In particular, Figs. 4A and 4B illustrate two exemplified scenarios where the range gear 108 is controlled in different manners. In both examples of Figs. 4A and 4B, the vehicle 10 is located at the current position corresponding to the first point in time 116, and a predicted travel trajectory 114 extends forward to the second point in time 118, as described above in connection to the description of Fig. 3. Before the vehicle 10 arrives at the first point in time 116, the range gear 108 is operated in the high range gear stage 110. As also indicated above, the predicted travel trajectory 114 may be determined in advance by the vehicle model 134 of the computer system 1000. Hence, the vehicle model 134 comprises parameters of the vehicle driveline 106 and external operating conditions 136. The predicted travel trajectory 114 may be determined in response to map data 152 or sensor data 154 indicative of future road slope, as also described in relation to Fig. 3.

Based on the predicted travel trajectory 114, the processing circuitry 1002 predicts a first vehicle speed 120 and a second vehicle speed 122 at the second point in time 118. The first vehicle speed 120 corresponds to continued operation of the transmission 104 in the high range gear stage 110, while the second vehicle speed 122 corresponds to operation in the low range gear stage 112. The prediction of the first 120 and second 122 vehicle speeds may, as described above, be performed by simulating the vehicle model 134. In the examples shown, the first 120 and second 122 vehicle speeds are predicted as respective speed profiles 148, 150 along the travel trajectory 114 from the first point in time 116 to the second point in time 118.

In the exemplified scenario illustrated in Fig. 4A, the predicted second vehicle speed 122 is not higher than the predicted first vehicle speed 120, and a shifting criterion is therefore not fulfilled. The shifting criterion may additionally include that the second vehicle speed 122 should exceed the first vehicle speed 120 by a predefined offset value 126, which is not obtained in the example depicted in Fig. 4A. Therefore, in the example depicted in Fig. 4A, the processing circuitry 1002 controls the transmission 104 to remain in the high range gear stage 110.

Fig. 4B illustrates an exemplified scenario where the shifting criterion is fulfilled. In the illustrated example of Fig. 4B, the predicted second vehicle speed 122 is higher than the predicted first vehicle speed 120 at the second point in time 118. The difference in predicted vehicle speeds also exceed the predefined offset value 126. Based on this evaluation, the processing circuitry 1002 identifies that the shifting criterion is fulfilled and initiates a shift to the low range gear stage 112.

The at least one shifting criterion may also comprise that a predicted vehicle acceleration in the high range gear stage is below a minimum threshold acceleration level at the first point in time. Hence, in each of the examples depicted in Figs. 4A - 4B, a gear shift to the low range gear stage may be performed if the predicted vehicle acceleration in the high range gear stage is below a defined threshold, irrespective of the difference between the predicted first and second vehicle speeds at the second point in time.

The gear shift from the high range gear stage 110 to the low range gear stage 112 may be performed at the first point in time 116 or within a predefined time interval 132 from the first point in time 116, for example, slightly before the vehicle 10 arrives at the first position, or slightly after. Also, the second point in time 118 is preferably within a predetermined time period 156 from the first point in time 116, which may, for example, be in the range between 3 and 10 seconds. Figs. 4A and 4B thus illustrate how gear stage selection can be dynamically controlled by the computer system 1000 based on a forward-looking assessment of vehicle performance using simulated speed predictions derived from trajectory-dependent modeling.

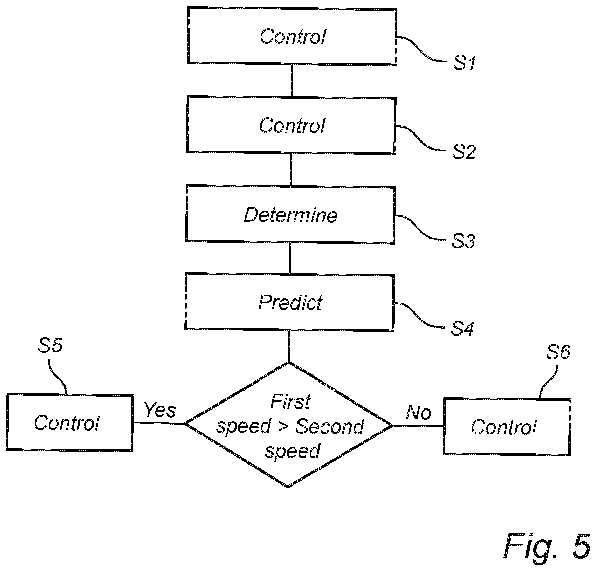

In order to sum up, reference is made to Fig. 5 which is an exemplary flow chart of a method of controlling the range gear 108 according to an example. During operation of the vehicle 10, the processing circuitry 1002 controls S1 the transmission 104 of the vehicle driveline 106. For example the processing circuitry 1002 controls the gear selection of the first motor transmission 160 as well as the second motor transmission 164. The processing circuitry 1002 also controls the range gear 108 to assume the high range gear stage 110 or the low range gear stage 112.

In the specific case, the processing circuitry 1002 controls S2 the transmission 104 to operate the range gear 108 in the high range gear stage 110. The processing circuitry 1002 also predicts S3 the above described travel trajectory 114 of the vehicle 10, which travel trajectory 114 extends from the first point in time 116 to the second point in time 118.

Further, the processing circuitry predicts S4 a first vehicle speed 120 and a second vehicle speed 122 at the second point in time 118. As also described above, the first vehicle speed 120 corresponds to a predicted vehicle speed with continued operation in the high range gear stage 110, while the second vehicle speed 122 corresponds to a predicted vehicle speed at the second point in time if a gear shift to the low range gear stage 112 is executed.

If at least one shifting criterion is not fulfilled, for example that the first predicted vehicle speed at the second point in time is higher than the second predicted vehicle speed, the processing circuitry controls S5 the transmission 104 to remain in the high range gear stage 110. On the other hand, if at least one shifting criterion is fulfilled, for example that the first predicted vehicle speed at the second point in time is lower than the second predicted vehicle speed, the processing circuitry 1002 controls S6 the transmission 104 to change to the low range gear stage 112. The shift may be executed at the first point in time 116 or within a predefined time interval 132 from the first point in time, as described in the examples above.

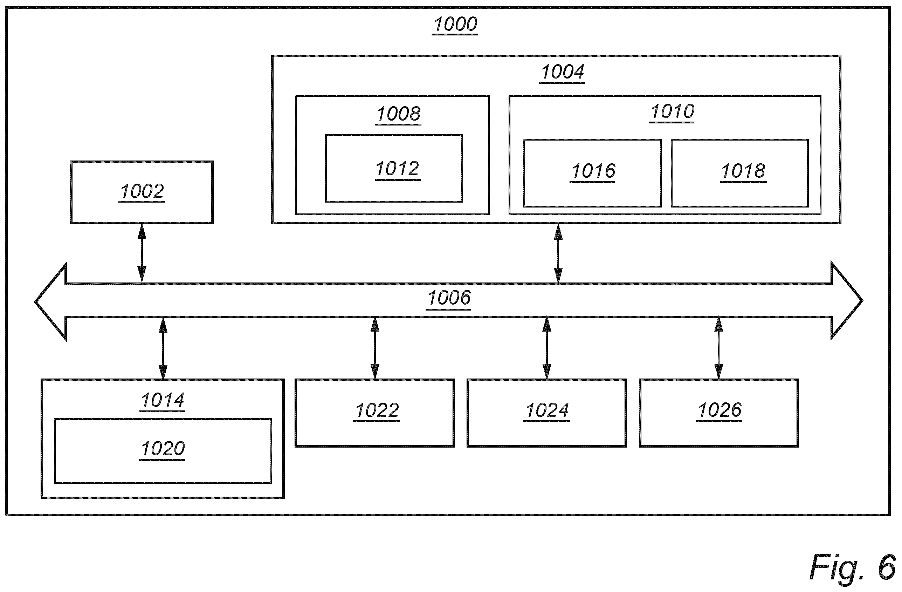

Fig. 6 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to: control a transmission of an electrically operated vehicle driveline of a vehicle, the transmission comprising a range gear with a high range gear stage and a low range gear stage, wherein the high range gear stage provides a lower transmission ratio compared to the low range gear stage, control the transmission to operate the range gear in the high range gear stage, determine a predicted travel trajectory of the vehicle from a first point in time to a second point in time, predict a first vehicle speed and a second vehicle speed of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and control the transmission to remain in the high range gear stage unless at least one shifting criterion is fulfilled, the shifting criterion comprising that the second vehicle speed is predicted to be higher than the first vehicle speed at the second point in time.

Example 2. The computer system of example 1, wherein the shifting criterion comprises that the second vehicle speed is predicted to be greater than the first vehicle speed by at least a predefined offset value.

Example 3. The computer system of any one of examples 1 or 2, wherein the shifting criterion further comprises that a predicted vehicle acceleration in the high range gear stage being below a minimum threshold acceleration level at the first point in time.

Example 4. The computer system of any one of the preceding examples, wherein the processing circuitry is configured to control the transmission to change to the low range gear stage within a predefined time interval from the first point in time in response to the at least one shifting criterion being fulfilled.

Example 5. The computer system of any one of the preceding examples, wherein the processing circuitry is configured to control the transmission to change to the low range gear stage at the first point in time in response to determining that the at least one shifting criterion is fulfilled.

Example 6. The computer system of any one of the preceding examples, wherein the prediction of the first and second vehicle speeds is performed by simulating a vehicle model comprising parameters of the vehicle driveline and external operating conditions.

Example 7. The computer system of example 6, wherein the simulation of the vehicle model comprises at least one of: an available motor torque of the electrically operated vehicle driveline, battery capability, road inclination along the predicted travel trajectory, rolling resistance, and aerodynamic drag.

Example 8. The computer system of any one of the preceding examples, wherein the first and second vehicle speeds are predicted as respective speed profiles along the predicted travel trajectory from the first point in time to the second point in time.

Example 9. The computer system of any one of the preceding examples, wherein the predicted travel trajectory is determined in response to map data or sensor data indicative of future road slope.

Example 10. The computer system of any one of the preceding examples, wherein the first point in time is a current point in time during operation of the vehicle.

Example 11. The computer system of any one of the preceding examples, wherein the second point in time is within a predetermined time period following the first point in time.

Example 12. The computer system of example 11, wherein the predetermined time period is in the range between 3 and 10 seconds from the first point in time.

Example 13. The computer system of any one of the preceding examples, wherein the electrically operated vehicle driveline comprises: a first electric traction motor and a first motor transmission connected to each other, and a second electric traction motor and a second motor transmission connected to each other, wherein the first and second motor transmissions are connected to the range gear.

Example 14. The computer system of example 13, wherein the processing circuitry is further configured to control a gear shift of the first motor transmission while, during the gear shift of the first motor transmission, controlling the second traction motor and the second motor transmission to maintain a torque flow from the second traction motor to the range gear.

Example 15. A vehicle comprising the computer system of any of examples 1-14.

Example 16. The vehicle of example 15, further comprising an electrically operated vehicle driveline comprising a transmission, wherein the transmission comprises a range gear with a high range state and a low range stage.

Example 17. A computer-implemented method, comprising: controlling, by processing circuitry of a computer system, a transmission of an electrically operated vehicle driveline of a vehicle, the transmission comprising a range gear with a high range gear stage and a low range gear stage, wherein the high range gear stage provides a lower transmission ratio compared to the low range gear stage, controlling, by the processing circuitry, the transmission to operate the range gear in the high range gear stage, determining, by the processing circuitry, a predicted travel trajectory of the vehicle from a first point in time to a second point in time, predicting, by the processing circuitry, a first vehicle speed and a second vehicle speed of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and controlling, by the processing circuitry, the transmission to remain in the high range gear stage unless at least one shifting criterion is fulfilled, the shifting criterion comprising that the second vehicle speed is predicted to be higher than the first vehicle speed at the second point in time.

Example 18. The method of example 17, further comprising: controlling, by the processing circuitry, the transmission to change to the low range gear stage within a predefined time interval from the first point in time in response to the at least one shifting criterion being fulfilled.

Example 19. The method of any one of examples 17 or 18, further comprising: controlling, by the processing circuitry, the transmission to change to the low range gear stage at the first point in time in response to determining that the at least one shifting criterion is fulfilled.

Example 20. A computer program product comprising program code for performing, when executed by the processing circuitry, the method of any of examples 17-19.

Example 21. A non-transitory computer-readable storage medium comprising instructions, which when executed by the processing circuitry, cause the processing circuitry to perform the method of any of examples 17-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
control a transmission (104) of an electrically operated vehicle driveline (106) of a vehicle (10), the transmission comprising a range gear (108) with a high range gear stage (110) and a low range gear stage (112), wherein the high range gear stage provides a lower transmission ratio compared to the low range gear stage,
control the transmission to operate the range gear in the high range gear stage,
determine a predicted travel trajectory (114) of the vehicle from a first point in time (116) to a second point in time (118),
predict a first vehicle speed (120) and a second vehicle speed (122) of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and
control the transmission to remain in the high range gear stage unless at least one shifting criterion is fulfilled, the shifting criterion comprising that the second vehicle speed is predicted to be higher than the first vehicle speed at the second point in time.

2. The computer system of claim 1, wherein the shifting criterion comprises that the second vehicle speed is predicted to be greater than the first vehicle speed by at least a predefined offset value (126).

3. The computer system of any one of claims 1 or 2, wherein the shifting criterion further comprises that a predicted vehicle acceleration in the high range gear stage being below a minimum threshold acceleration level at the first point in time.

4. The computer system of any one of the preceding claims, wherein the processing circuitry is configured to control the transmission to change to the low range gear stage within a predefined time interval (132) from the first point in time in response to the at least one shifting criterion being fulfilled.

5. The computer system of any one of the preceding claims, wherein the processing circuitry is configured to control the transmission to change to the low range gear stage at the first point in time in response to determining that the at least one shifting criterion is fulfilled.

6. The computer system of any one of the preceding claims, wherein the prediction of the first and second vehicle speeds is performed by simulating a vehicle model (134) comprising parameters of the vehicle driveline (106) and external operating conditions (136).

7. The computer system of claim 6, wherein the simulation of the vehicle model comprises at least one of: an available motor torque (138) of the electrically operated vehicle driveline, battery capability (140), road inclination (142) along the predicted travel trajectory, rolling resistance (144), and aerodynamic drag (146).

8. The computer system of any one of the preceding claims, wherein the first and second vehicle speeds are predicted as respective speed profiles (148, 150) along the predicted travel trajectory from the first point in time to the second point in time.

9. The computer system of any one of the preceding claims, wherein the first point in time is a current point in time during operation of the vehicle.

10. The computer system of any one of the preceding claims, wherein the electrically operated vehicle driveline comprises:
a first electric traction motor (158) and a first motor transmission (160) connected to each other, and
a second electric traction motor (162) and a second motor transmission (164) connected to each other,
wherein the first and second motor transmissions are connected to the range gear.

11. The computer system of claim 10, wherein the processing circuitry is further configured to control a gear shift of the first motor transmission while, during the gear shift of the first motor transmission, controlling the second traction motor and the second motor transmission to maintain a torque flow from the second traction motor to the range gear.

12. A vehicle (10) comprising the computer system of any of claims 1-11.

13. A computer-implemented method, comprising:
controlling (S1), by processing circuitry of a computer system, a transmission of an electrically operated vehicle driveline of a vehicle, the transmission comprising a range gear with a high range gear stage and a low range gear stage, wherein the high range gear stage provides a lower transmission ratio compared to the low range gear stage,
controlling (S2), by the processing circuitry, the transmission to operate the range gear in the high range gear stage,
determining (S3), by the processing circuitry, a predicted travel trajectory of the vehicle from a first point in time to a second point in time,
predicting (S4), by the processing circuitry, a first vehicle speed and a second vehicle speed of the vehicle at the second point in time, the first vehicle speed being predicted for continued operation in the high range gear stage from the first point in time to the second point in time, and the second vehicle speed being predicted for a gear shift to the low range gear stage from the first point in time to the second point in time, and
controlling (S5), by the processing circuitry, the transmission to remain in the high range gear stage unless at least one shifting criterion is fulfilled, the shifting criterion comprising that the second vehicle speed is predicted to be higher than the first vehicle speed at the second point in time.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
